# EUROPEAN PATENT APPLICATION

(11) **EP 4 711 340 A1**
(43) Date of publication of application: **18.03.2026**
(21) Application number: 24732036.9
(22) Date of filing: 08.05.2024
(51) Int. Cl.: C02F 1/00, B01D 61/14, B01D 61/22, C02F 1/44, C02F 1/68

(54) **WATER REMINERALISATION FACILITY AND METHOD**

(30) Priority: 10.05.2023 ES 202330362
(71) Applicant: Acciona Agua, S.A., 08820 El Prat de Llobregat (Barcelona) (ES)
(72) Inventor: PALACIOS JIMÉNEZ, Enrique, 08820 El Prat de Llobregat, Barcelona (ES); FERRER MALLÉN, Olga, 08820 El Prat de Llobregat, Barcelona (ES); LLOPART AGUADO, Nil, 08820 El Prat de Llobregat, Barcelona (ES)
(74) Representative: Pons IP
(86) International application number: PCT/ES2024/070278
(87) International publication number: WO 2024/231587

(57) **Abstract**

The present invention can be included within the technical field of remineralisation of water for human use and consumption by adding carbon dioxide and lime. More specifically, the object of the invention relates to an installation for remineralisation of water that in turn allows turbidity to be reduced and controlled precisely so that maintenance is reduced, the use of reagents decreases and the lifetime of the installation's components increases, especially of the membrane filtration system, where another object of the invention is the associated method for remineralisation of water.

## Description

### OBJECT OF THE INVENTION

The present invention can be included within the technical field of remineralisation of water for human use and consumption by adding carbon dioxide and lime. More specifically, the object of the invention relates to an installation for remineralisation of water that in turn allows turbidity to be reduced and controlled precisely so that maintenance is reduced, the use of reagents decreases and the lifetime of the installation's components increases, especially the membrane filtration system. Another object of the invention is the associated method for remineralisation of water.

### BACKGROUND OF THE INVENTION

In seawater desalination plants and in some water treatment plants, the product water has such low salinity and hardness that it is not suitable for human consumption. That is why remineralisation post-treatment is applied. There are several remineralisation systems, the most widespread being:
- Remineralisation with calcite beds,
- Remineralisation with CO₂ and lime.

In CO₂ and lime systems, a stream of lime milk is introduced into a decanter (called lime saturator). In this decanter, the chemical reaction of lime with water occurs so that it dissolves completely until complete saturation. Theoretically, lime should dissolve completely in water without interfering with its turbidity, but this does not occur due to the presence of CO₂ from air. Calcite (CaCO₃) is formed, which, given its very low solubility, precipitates in mineral form, creating turbidity in water.

Furthermore, lime used industrially does not have absolute purity. Impurities can be up to 2 to 6%. These impurities (commonly silica, iron, manganese minerals) are also insoluble in water, providing unwanted turbidity that could compromise the quality of the final effluent after the remineralisation process.

Remineralisation processes with CO₂ and lime, once the water leaves the saturator with high turbidity (mainly due to calcite precipitates and impurities), it is mixed with another stream of water to which CO₂ has previously been added to give it the characteristics of hardness, alkalinity, total dissolved solids (TDS) and pH necessary to make it suitable for consumption. The mixture between these two waters leads to an increased turbidity in the product water and could sometimes be higher than that recommended for use. Likewise, this turbidity, product of calcareous precipitates, could cause blockages in pipes, equipment, etc., in addition to calcite precipitates and impurities in drinking water tanks, increasing the need for regular maintenance.

In some schemes, the effluent from the saturator as well as the CO₂ added to the water of the main stream is passed through a membrane filtration system to reduce the turbidity of the product water. Nevertheless, this solution has the drawback that it causes damage to the filtration membranes since the entire effluent would be passing through the filter throughout its lifetime and, furthermore, it is not possible to control turbidity precisely, said turbidity having to be within standardised thresholds.

For example, document WO12113957A describes a saturator fed by a first flow, where the total effluent from the saturator is filtered and subsequently mixed with a remaining flow to reduce the turbidity of the product. Furthermore, both the water dosed with CO₂ and the effluent water from the saturator, which is Ca(OH)₂-saturated water, are fed to the filter module.

Another solution known in the state of the art is, for example, document WO2020212980A, which describes a water treatment system comprising a mixing chamber configured to receive and mix CaO and calcium hydroxide (Ca(OH)₂) with treated water to thus form lime milk. This lime milk is passed along with part of the treated water, for example, through reverse osmosis, by a membrane filter module and is subsequently mixed with treated water, resulting in a product with a turbidity less than 0.5 NTU.

### DESCRIPTION OF THE INVENTION

The present invention aims to solve some of the drawbacks mentioned in the state of the art. More specifically, in a first aspect, the present invention relates to an installation for remineralisation of water that in turn allows the turbidity of water to be controlled and reduced, wherein the installation comprises:
- a lime saturator fed by lime milk and water, in which the chemical reaction occurs in which at least part of the lime dissolves in the water,
- a filter module comprising a membrane filtration system that in turn comprises ultrafiltration membranes, wherein the membrane filtration system is fed by at least part of an effluent from the saturator, generating an output of Ca(OH)₂-saturated water from the saturator.

Optionally, the installation further comprises a control system configured to guarantee low turbidity of the final effluent.

Preferably, the filter module further comprises a self-cleaning filter, wherein the effluent from the lime saturator is introduced, before being introduced into the membrane filtration system, to remove larger solids.

More specifically, the present invention relates to an installation for remineralisation with precise control of the turbidity of the product water, as well as of the turbidity at different points of the installation to produce savings in operation, maintenance, use of reagents and extending the lifetime of the membranes.

To that end, the installation preferably comprises:
- a stream of demineralised water that must be remineralised, for example, the permeate from a reverse osmosis process,
- a lime saturator fed by lime milk fed by the stream of demineralised water configured to produce a chemical reaction in which at least part of the lime dissolves in the water, generating an output of Ca(OH)₂-saturated water,
- a carbon dioxide dispenser that doses CO₂ to the stream of demineralised water prior to mixing with the stream of Ca(OH)₂-saturated water,
- a membrane filtration system comprising ultrafiltration membranes, wherein said membrane filtration system is fed by at least part of the effluent from the saturator,
- a regulating valve configured to regulate the passage of the effluent from the saturator that passes through the membrane filtration system,
- a bypass valve configured to divert at least part of the effluent from the saturator, avoiding its passage through the membrane filtration system and directing it to the main stream line provided with the water dosed with CO₂,
- a first turbidity meter of remineralised water in the main stream and a second turbidity meter at the outlet of the saturator.

In a preferred embodiment of the present invention, the control system is operationally connected to the valves and to the turbidity meters, so that said control system is configured to send a signal to open and close the passage of the valves at different opening positions when the turbidity value of at least one of the turbidity meters is higher than a predetermined reference turbidity threshold, and until reaching a final turbidity in the main stream that is less than said predetermined reference turbidity threshold.

Furthermore, during the time when the turbidity of the product water measured by at least one of the turbidity meters of the main stream is above the reference value, water that is out of specification and depending on the project can be used for different purposes, for example, for service water or to reduce the salinity of the input water by recirculating at plant head, or for the preparation of lime milk.

Preferably, the self-cleaning filter of the filter module arranged prior to the membrane filtration system is connected in series to the regulating valve and to the membrane filtration system in such a way that said self-cleaning filter is configured to pre-filter the effluent from the saturator before passing through the membrane filtration system, to remove larger solids.

It is possible that on some occasions the filtering of the self-cleaning filter is sufficient to reduce the turbidity of the final product water. Consequently, a second embodiment comprises a bypass valve to prevent the effluent from passing through the filter module on specific occasions. In this way, savings in operation, maintenance and reagents are achieved.

The control system can be a distributed control system, one or more PLCs, a SCADA system, etc.

Preferably, the control system is configured to:
a.) send a signal to close the regulating valve and a signal to open the bypass valve, so that all the water is channelled to the filter module,
b.) detect a first turbidity value of the main stream measured by the first turbidity meter at the outlet of the membrane filtration system,
c.) determine the desired reference turbidity threshold in the final effluent,
d.) send a signal to the regulating valve to at least partially open said valve to a first position and send a signal to at least partially close the bypass valve to a first position, when the condition that the first measured turbidity value is higher than the reference turbidity threshold is met,
e.) detect a second turbidity value measured by the first turbidity meter at the outlet of the membrane filtration system,
f.) send a signal to the regulating valve to open said valve to a second position that allows greater flow passage than the first position of step d.), and close the bypass valve to a second position that allows lesser flow passage than the first position of step d.), when the condition that the second measured turbidity value is higher than the reference turbidity threshold is met,
g.) repeat the previous step, varying the passage of the valves and varying their opening position until a final turbidity value measured by the first turbidity meter at the outlet of the membrane filtration system is less than the reference turbidity threshold.

Likewise, the installation may have a second turbidity meter at the outlet of the saturator that is operationally connected to the control system, and this control system can be configured to control the installation in the following way, carrying out the following control steps:
h.) detect the turbidity value at the outlet of the saturator measured by the second turbidity meter at the outlet of the saturator,
i.) determine a turbidity threshold for changing regime at the outlet of the saturator,
j.) maintain the opening position of the valves that is reached in step g.) while the turbidity threshold for changing regime is equal to or higher than the turbidity at the outlet of the saturator,
k.) at least partially open the regulating valve with respect to the position reached in step g.) and at least partially close the bypass valve with respect to the last position reached in step g.), if the condition that the turbidity at the outlet of the saturator is higher than the threshold for changing regime is met.

As previously mentioned, the filter module may comprise a self-cleaning filter fluidly connected to the regulating valve, as well as to the membrane filtration system and to a bypass valve in such a way that said self-cleaning filter is configured to pre-filter the effluent from the saturator before passing through the membrane filtration system or to divert said effluent directly to the main line once it has been filtered by said self-cleaning filter.

Thus, in said embodiment, the control system can be configured to:
l.) detect the turbidity at the outlet of the saturator by means of the second turbidity meter,
m.) establish a second turbidity threshold at the outlet of the saturator,
n.) send a signal to open the bypass valve if the turbidity measured at the outlet of the saturator is less than the second predetermined threshold.

Likewise, when it is necessary to pass the effluent through the membrane filtration system, the control system can be configured to:
o.) measure the turbidity at the outlet of the saturator,
p.) determine a third turbidity threshold at the outlet of the saturator,
q.) send a signal to close, at least partially, the bypass valve, thus introducing a greater proportion of the water filtered by the self-cleaning filter into the membrane filtration system, as long as the turbidity measured at the outlet of the saturator is higher than the third turbidity threshold at the outlet of the saturator.

In a second aspect, the present invention relates to a method for remineralisation of water carried out in any of the installation embodiments described above, wherein said method comprises at least the steps of:
- dissolution in water of at least a part of lime in a lime saturator fed by lime milk and water,
- filtration through ultrafiltration membranes that are fed by at least part of an effluent from the saturator, generating an output of Ca(OH)₂-saturated water from the saturator.

Optionally, the method further comprises the following steps:
a.) close the regulating valve and open the bypass valve, so that the entire effluent from the saturator is channelled to the membrane filtration system,
b.) measure a first turbidity value of the main stream,
c.) determine the desired reference turbidity threshold in the final effluent,
d.) at least partially open the regulating valve to a first position and at least partially close the bypass valve when the condition that the first turbidity value is higher than the reference turbidity threshold is met,
e.) detect a second turbidity value measured by the main stream turbidity meter at the outlet of the membrane filtration system,
f.) open the regulating valve to a second position that allows greater flow passage than its first position in step d.), and close the bypass valve to a second position that allows lesser flow passage than its first position in step d.), when the condition that the second measured turbidity value remains higher than the reference turbidity threshold is met,
g.) repeat the previous step, varying the passage of the valves and varying their opening position until a final turbidity value measured by the turbidity meter at the outlet of the membrane filtration system is less than the reference turbidity threshold.

In one embodiment, the method may comprise:
h.) determine the turbidity at the outlet of the saturator,
i.) determine a first turbidity threshold for changing regime at the outlet of the saturator,
j.) maintain the position of the valves in step g.) as long as the turbidity threshold for changing regime is equal to or higher than the turbidity at the outlet of the saturator,
k.) at least partially open the regulating valve with respect to the position reached in step g.) and at least partially close the bypass valve with respect to the last position established in step g.), if the condition that the turbidity at the outlet of the saturator is higher than the threshold for changing regime is met.

If the installation has a self-cleaning filter and a bypass valve, the control method may further comprise the steps of:
l.) measure the turbidity at the outlet of the saturator,
m.) determine a second threshold at the outlet of the saturator,
n.) open the bypass valve if the turbidity measured at the outlet of the saturator is less than the second predetermined threshold.

Likewise, when it is necessary to pass the effluent through the membrane filtration system, the method comprises the following steps:
o.) measure the turbidity at the outlet of the saturator,
p.) determine a third threshold at the outlet of the saturator,
q.) close the bypass valve, thus introducing the water filtered by the self-cleaning filter into the membrane filtration system, as long as the turbidity measured at the outlet of the saturator is higher than the third turbidity threshold at the outlet of the saturator.

### DESCRIPTION OF THE DRAWINGS

To complement the description that is being made and for the purpose of helping to better understand the features of the invention, according to a preferred practical exemplary embodiment thereof, a set of figures is attached as an integral part of said description, wherein the following has been depicted in an illustrative and non-limiting manner:

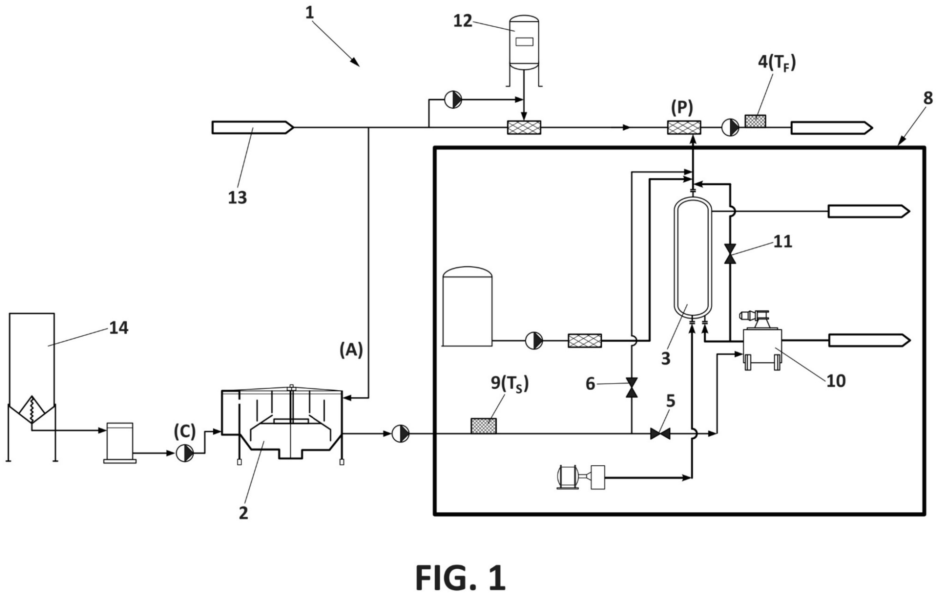

Figure 1 shows a schematic view of the installation for remineralisation of water according to a preferred embodiment of the present invention.

### PREFERRED EMBODIMENT OF THE INVENTION

With the help of attached figure 1 that has been previously described, a detailed description of a preferred exemplary embodiment of the object of the invention is provided below.

The object of the invention relates to an installation for remineralisation of water and to a method associated therewith. More particularly, as can be observed in figure 1, the installation comprises:
- a stream of demineralised water that must be remineralised, for example, the permeate from a reverse osmosis process,
- a lime saturator (2) fed by lime milk (C) and water, in which the chemical reaction occurs in which at least part of the lime (C) dissolves in the water, generating an output of Ca(OH)₂-saturated water from the saturator (2),
- a carbon dioxide dispenser (12) that doses CO₂ to the stream of demineralised water (13) (total flow of demineralised water minus the flow provided to the saturator) prior to mixing with the stream of Ca(OH)₂-saturated water,
- a membrane filtration system (3) comprising ultrafiltration membranes, wherein said filter system is fed by at least part of the effluent from the saturator (2),
- a regulating valve (5) configured to regulate the passage of the effluent from the saturator that passes through the membrane filtration system (3),
- a bypass valve (6) configured to divert at least part of the effluent from the saturator (2), avoiding its passage through the membrane filtration system (3) and directing it to the main stream line (P) provided with the water dosed with CO₂,
- a first turbidity meter (4TF) of remineralised water in the main stream (7P) at the outlet of the membrane filtration system (3).

To precisely control the turbidity of the product water, the installation further comprises a control system (8) operationally connected to the regulating valve (5) and bypass valve (6) and to the first turbidity meter (4TF), wherein said control system (8) is configured to send a signal to open and close the passage of the regulating valve (4) and bypass valve (5) at different opening positions when the turbidity value (Tf) of the first turbidity meter (4TF) is higher than a predetermined reference turbidity threshold (Tr), and until reaching a final turbidity (Tfx) in the main stream that is less than said predetermined reference turbidity threshold (Tr).

More specifically, in a preferred embodiment, the control system is configured to:
a.) send a signal to close the regulating valve (5) and a signal to open the bypass valve (6), so that all the water is diverted to the filter module,
b.) detect a first turbidity value of the main stream (Tf) measured by the first turbidity meter (4TF) at the outlet of the membrane filtration system (3),
c.) determine the reference turbidity threshold (Tr),
d.) send a signal to the regulating valve (5) to at least partially open said regulating valve (5) to a first position and send a signal to at least partially close the bypass valve (6) to a first position, when the condition Tf>Tr is met,
e.) detect a second turbidity value (Tf2) measured by the turbidity meter (4) at the outlet of the membrane filtration system (3),
f.) send a signal to the regulating valve (5) to open said regulating valve (5) to a second position that allows greater flow passage than the first position of step d.), and close the bypass valve (6) to a second position that allows lesser flow passage than the first position of step d.), when the condition Tf2>Tr is met,
g.) repeat the previous step, varying the passage of the regulating valve (5) and bypass valve (6) and varying their opening position until a final turbidity value (Tfx) measured by the turbidity meter (4) at the outlet of the membrane filtration system (3) is less than the reference turbidity threshold (Tr).

In the preferred embodiment of the installation described by figure 1, the installation further comprises a turbidity meter (9) at the outlet of the saturator (2) operatively connected to the control system (8), wherein said control system (8) is additionally configured to:
h.) detect the turbidity value at the outlet of the saturator (Ts) measured by the turbidity meter (9) at the outlet of the saturator (2),
i.) determine a turbidity threshold for changing regime (µTs) at the outlet of the saturator (2),
j.) maintain the opening position of the regulating valve (5) and bypass valve (6) that is reached in step g.) while the turbidity threshold for changing regime (µTs) is equal to or higher than the turbidity at the outlet of the saturator (Ts),
k.) at least partially open the regulating valve (5) with respect to the position reached in step g.) and at least partially close the bypass valve (6) with respect to the last position reached in step g.), if the condition Ts > µTs is met.

In the preferred embodiment shown, the filter module further comprises a self-cleaning filter (10) fluidly connected to the regulating valve (5), to the membrane filtration system (3) and to a second bypass valve (11) in such a way that said self-cleaning filter (10) is configured to pre-filter the effluent from the saturator before passing through the membrane filtration system (3) and/or to divert at least part of said effluent directly to the main line (P) once it has been filtered by said self-cleaning filter (10).

Therefore, in a preferred embodiment, the control system (8) is configured to:
l.) detect the turbidity at the outlet of the saturator (Ts) by means of a turbidity meter (9),
m.) establish a second turbidity threshold (µTs) at the outlet of the saturator (2),
n.) send a signal to open the second bypass valve (11) if the turbidity measured at the outlet of the saturator (Ts) is less than the second predetermined threshold (µ2Ts).

Alternatively or in combination with the foregoing, the control system (8) is configured to:
o.) measure the turbidity at the outlet of the saturator (Ts),
p.) determine a third turbidity threshold (µTs) at the outlet of the saturator (2),
q.) send a signal to close the second bypass valve (11), thus introducing the water filtered by the self-cleaning filter (10) into the membrane filtration system (3), as long as the turbidity measured at the outlet of the saturator (Ts) is higher than the third turbidity threshold (µ2Ts) at the outlet of the saturator (2).

In a second aspect, the present invention relates to a method for remineralisation of water and control to control and reduce the turbidity of the installation described above, wherein said method may comprise any of the steps a.) - q.) described above for the control system (8).

## Claims

1. An installation for remineralisation of water that in turn allows the turbidity of water to be reduced and controlled, **characterised in that** it comprises:
- a lime saturator (2) fed by lime milk (C) and water, in which the chemical reaction occurs in which at least part of the lime (C) dissolves in the water,
- a filter module comprising a membrane filtration system (3) that in turn comprises ultrafiltration membranes, wherein the membrane filtration system (3) is fed by at least part of an effluent from the saturator (2).

2. The installation according to claim 1, further comprising:
- a carbon dioxide dispenser that doses CO₂ to the stream of demineralised water (13) prior to mixing with the stream of Ca(OH)₂-saturated water,
- a regulating valve (5) configured to regulate the passage of the effluent from the saturator that passes through the membrane filtration system (3),
- a bypass valve (6) configured to divert at least part of the effluent from the saturator (2), avoiding its passage through the membrane filtration system (3) and directing it to the main stream line (P) provided with the water dosed with CO₂, and
- a first turbidity meter (4TF) of remineralised water in the main stream (7P) at the outlet of the membrane filtration system (3).

3. The installation according to claim 2, further comprising a control system (8) operationally connected to the regulating valve (5) and bypass valve (6) and to the first turbidity meter (4TF), wherein said control system (8) is configured to send a signal to open and close the passage of the regulating valve (4) and bypass valve (5) at different opening positions when the turbidity value (Tf) of the first turbidity meter (4TF) is higher than a predetermined reference turbidity threshold (Tr), and until reaching a final turbidity (Tfx) in the main stream that is less than said predetermined reference turbidity threshold (Tr).

4. The installation according to claim 3, wherein the control system is configured to:
a.) send a signal to close the regulating valve (5) and a signal to open the bypass valve (6), so that all the water is diverted to the filter module,
h.) detect a first turbidity value of the main stream (Tf) measured by the first turbidity meter (4TF) at the outlet of the membrane filtration system (3),
i.) determine the reference turbidity threshold (Tr),
j.) send a signal to the regulating valve (5) to at least partially open said regulating valve (5) to a first position and send a signal to at least partially close the bypass valve (6) to a first position, when the condition Tf>Tr is met,
k.) detect a second turbidity value (Tf2) measured by the turbidity meter (4) at the outlet of the membrane filtration system (3),
l.) send a signal to the regulating valve (5) to open said regulating valve (5) to a second position that allows greater flow passage than the first position of step d.), and close the bypass valve (6) to a second position that allows lesser flow passage than the first position of step d.), when the condition Tf2>Tr is met,
m.) repeat the previous step, varying the passage of the regulating valve (5) and bypass valve (6) and varying their opening position until a final turbidity value (Tfx) measured by the turbidity meter (4) at the outlet of the membrane filtration system (3) is less than the reference turbidity threshold (Tr).

5. The installation according to claim 4, further comprising a turbidity meter (9) at the outlet of the saturator (2) operatively connected to the control system (8), wherein said control system (8) is additionally configured to:
h.) detect the turbidity value at the outlet of the saturator (Ts) measured by the turbidity meter (9) at the outlet of the saturator (2),
i.) determine a turbidity threshold for changing regime (µTs) at the outlet of the saturator (2),
j.) maintain the opening position of the regulating valve (5) and bypass valve (6) that is reached in step g.) while the turbidity threshold for changing regime (µTs) is equal to or higher than the turbidity at the outlet of the saturator (Ts),
k.) at least partially open the regulating valve (5) with respect to the position reached in step g.) and at least partially close the bypass valve (6) with respect to the last position reached in step g.), if the condition Ts > µTs is met.

6. The installation according to claim 5, wherein the filter module further comprises a self-cleaning filter (10) fluidly connected to the regulating valve (5), to the membrane filtration system (3) and to a second bypass valve (11) in such a way that said self-cleaning filter (10) is configured to pre-filter the effluent from the saturator before passing through the membrane filtration system (3) and/or to divert at least part of said effluent directly to the main line (P) once it has been filtered by said self-cleaning filter (10).

7. The installation according to claim 6, wherein the control system (8) is configured to:
l.) detect the turbidity at the outlet of the saturator (Ts) by means of a turbidity meter (9),
m.) establish a second turbidity threshold (µTs) at the outlet of the saturator (2), n.) send a signal to open the second bypass valve (11) if the turbidity measured at the outlet of the saturator (Ts) is less than the second predetermined threshold (µ2Ts).

8. The installation according to any of claims 6 or 7, wherein the control system (8) is configured to:
o.) measure the turbidity at the outlet of the saturator (Ts),
p.) determine a third turbidity threshold (µTs) at the outlet of the saturator (2),
q.) send a signal to close the second bypass valve (11), thus introducing the water filtered by the self-cleaning filter (10) into the membrane filtration system (3), as long as the turbidity measured at the outlet of the saturator (Ts) is higher than the third turbidity threshold (µ2Ts) at the outlet of the saturator (2).

9. A method for remineralisation of water carried out in the installation of any of the preceding claims that comprises at least the steps of:
- dissolution in water of at least a part of lime in a lime saturator fed by lime milk and water,
- filtration through ultrafiltration membranes that are fed by at least part of an effluent from the saturator, generating an output of Ca(OH)₂-saturated water from the saturator.

10. The method according to claim 9, carried out in the installation of claim 3, and additionally comprising the following steps:
a.) send a signal to close the regulating valve (5) and a signal to open the bypass valve (6), so that all the water is diverted to the filter module,
n.) detect a first turbidity value of the main stream (Tf) measured by the first turbidity meter (4TF) at the outlet of the membrane filtration system (3),
o.) determine the reference turbidity threshold (Tr),
p.) send a signal to the regulating valve (5) to at least partially open said regulating valve (5) to a first position and send a signal to at least partially close the bypass valve (6) to a first position, when the condition Tf>Tr is met,
q.) detect a second turbidity value (Tf2) measured by the turbidity meter (4) at the outlet of the membrane filtration system (3),
r.) send a signal to the regulating valve (5) to open said regulating valve (5) to a second position that allows greater flow passage than the first position of step d.), and close the bypass valve (6) to a second position that allows lesser flow passage than the first position of step d.), when the condition Tf2>Tr is met,
s.) repeat the previous step, varying the passage of the regulating valve (5) and bypass valve (6) and varying their opening position until a final turbidity value (Tfx) measured by the turbidity meter (4) at the outlet of the membrane filtration system (3) is less than the reference turbidity threshold (Tr).

11. The method according to claim 10, carried out in the installation of claim 4, and additionally comprising the following steps:
h.) detect the turbidity value at the outlet of the saturator (Ts) measured by the turbidity meter (9) at the outlet of the saturator (2),
i.) determine a turbidity threshold for changing regime (µTs) at the outlet of the saturator (2),
j.) maintain the opening position of the regulating valve (5) and bypass valve (6) that is reached in step g.) while the turbidity threshold for changing regime (µTs) is equal to or higher than the turbidity at the outlet of the saturator (Ts),
k.) at least partially open the regulating valve (5) with respect to the position reached in step g.) and at least partially close the bypass valve (6) with respect to the last position reached in step g.), if the condition Ts > µTs is met.

12. The method according to claim 11, carried out in the installation of claim 6, and additionally comprising the following steps:
l.) detect the turbidity at the outlet of the saturator (Ts) by means of a turbidity meter (9),
m.) establish a second turbidity threshold (µTs) at the outlet of the saturator (2),
n.) send a signal to open the second bypass valve (11) if the turbidity measured at the outlet of the saturator (Ts) is less than the second predetermined threshold (µ2Ts).

13. The method according to claim 12, additionally comprising the following steps:
o.) measure the turbidity at the outlet of the saturator (Ts),
p.) determine a third turbidity threshold (µTs) at the outlet of the saturator (2),
q.) send a signal to close the second bypass valve (11), thus introducing the water filtered by the self-cleaning filter (10) into the membrane filtration system (3), as long as the turbidity measured at the outlet of the saturator (Ts) is higher than the third turbidity threshold (µ2Ts) at the outlet of the saturator (2).
